(19) **Europäisches Patentamt**

**European Patent Office**

**Office européen des brevets**

(11) Veröffentlichungsnummer : **0 466 678 A1**

(12) **EUROPÄISCHE PATENTANMELDUNG**

(21) Anmeldenummer : **91890134.9**

(22) Anmeldetag : **28.06.91**

(51) Int. Cl.⁵ : **B62B 3/10**

(30) Priorität : **29.06.90 AT 1400/90**

(43) Veröffentlichungstag der Anmeldung :
**15.01.92 Patentblatt 92/03**

(84) Benannte Vertragsstaaten :
**AT BE CH DE DK FR GB IT LI NL SE**

(71) Anmelder : **Alexander, Rodewald Robert
Kleinengersdorferstrasse 18
A-2100 Korneuburg (AT)**

(72) Erfinder : **Alexander, Rodewald Robert
Kleinengersdorferstrasse 18
A-2100 Korneuburg (AT)**

(74) Vertreter : **Hübscher, Heiner, Dipl.-Ing. et al
Spittelwiese 7
A-4020 Linz (AT)**

(54) **Einkaufswagen.**

(57)    Ein Einkaufwagen, der zur Bildung einer Wagenreihe aus ineinandergeschobenen, gleichartigen Wagen ein Fahrgestell (2) mit einem außerhalb des Wageneinschubbereiches heckseitig aufragenden Tragrahmen (3) für einen oberhalb des Fahrgestelles (2) frei vorragenden Warenkorb (4) aufweist, der in einer Wagenreihe heckseitig den Warenkorb (4) des anschließenden, eingeschobenen Wagens aufnimmt, wird zu einem werbewirksamen Werbeträger dadurch ausgebildet, daß außen an den außerhalb des Wageneinschubbereiches befindlichen Seitenteilen des heckseitigen Tragrahmens (3) oder des Warenkorbes (4) Werbemittelträger (6) vorgesehen sind.

FIG.1

EP 0 466 678 A1

Jouve, 18, rue Saint-Denis, 75001 PARIS

Die Erfindung bezieht sich auf einen Einkaufwagen, der zur Bildung einer Wagenreihe aus ineinandergeschobenen, gleichartigen Wagen ein Fahrgestell mit einem außerhalb des Wageneinschubbereiches heckseitig aufragenden Tragrahmen für einen oberhalb des Fahrgestelles frei vorragenden Warenkorb aufweist, der in einer Wagenreihe heckseitig den Warenkorn des anschließenden, eingeschobenen Wagens aufnimmt, und der einen Werbeträger bildet.

Um Einkaufwagen, die vor allem im Bereich von Selbstbedienungsmärkten eingesetzt werden, als Werbeträger ausnützen zu können, ist es bekannt (DE-A-2 535 017), den Boden des im allgemeinen gitterförmigen Warenkorbes solcher Einkaufwagen als Werbemittelträger auszubilden. Diese Anordnung des Werbemittelträgers beschränkt die Wahrnehmung des Werbemittels im wesentlichen auf den Benützer des leeren Einkaufwagens, weil das Werbemittel durch die im Warenkorb befindlichen Waren abgedeckt wird. Da die Werbemittelträger außerdem beim Ineinanderschieben der Einkaufwagen zu Wagenreihen abgedeckt werden, wenn jeweils der Warenkorb des in der Reihe vorangehenden Wagens den Warenkorb des nachfolgenden, eingeschobenen Wagens durch eine heckseitige Pendelwand od. dgl. aufnimmt, konnten sich solche Werbemittelträger nicht durchsetzen.

Um gitterartige Tragkörbe als Werbeträger einsetzen zu können, wurde außerdem vorgeschlagen (EP-A-323 766), an den Seitenwänden dieser Tragkörbe Werbemittelträger anzuklemmen. Mit dem Stapeln solcher Tragkörbe werden die seitlichen Werbemittel überdeckt, was den Werbewert wegen der dann nicht erkennbaren Werbemittel erheblich herabsetzt.

Der Erfindung liegt somit die Aufgabe zugrunde, diese Mängel zu vermeiden und einen Einkaufwagen der eingangs geschilderten Art mit einfachen Mitteln so als Werbeträger auszugestalten, daß die Werbemittel stets wahrnehmbar bleiben und folglich einen hohen Werbewert erhalten.

Die Erfindung löst die gestellte Aufgabe dadurch, daß außen an den außerhalb des Wageneinschubbereiches befindlichen Seitenteilen des heckseitigen Tragrahmens oder des Warenkorbes wenigstens ein Werbemittelträger vorgesehen ist.

Die seitliche Anordnung des Werbemittelträgers am Einkaufwagen sichert die Wahrnehmbarkeit des Werbemittels unabhängig vom Füllungsgrad des Warenkorbes. Darüber hinaus ergibt sich eine die Auffälligkeit des Werbemittels wesentlich steigernde, unmittelbare Aneinanderreihung der einzelnen Werbemittelträger im Bereich einer Wagenreihe aus solchen ineinandergeschobenen Wagen, weil sich ja die Werbemittelträger außerhalb des Wageneinschubbereiches befinden und die sich bezüglich des jeweils vorangehenden Wagens ergebenden Wagenüberstände eine gleichmäßige Reihe geometrischer Felder bilden, so daß sich die im Bereich dieser Felder vorgesehenen Werbemittel zu einem auffallenden Reihenbild ergänzen. Dieses Reihenbild kann zusätzlich durch die bildliche Ausgestaltung des Werbemittels betont werden, das dann insbesondere im Bereich der abgestellten Wagenreihen zur Wirkung kommt.

Die Tragrahmen für den üblicherweise gitterartigen Warenkorb eignen sich in besonders vorteilhafter Weise als Werbemittelträger, weil sie ausreichend große Werbeflächen ermöglichen, ohne die gewünschte Einsicht in den Warenkorb zu behindern. Da die Anordnung der Werbemittelträger auf den Wagenüberstand außerhalb des Wageneinschubbereiches begrenzt wird, wird die Einsicht in einen gitterartigen Warenkorb auch durch seitlich am Korbgitter angebrachte Werbemittel nicht in unzulässiger Weise behindert.

Bei der Herstellung von Einkaufwagen können die Seitenteile des Tragrahmens oder des Warenkorbes bereits als Werbemittelträger ausgebildet werden. Zum Nachrüsten bestehender Einkaufwagen empfiehlt es sich, die Werbemittelträger an den Seitenteilen des Tragrahmens oder des Warenkorbes anzuklemmen, wofür sich vor allem Schnappverschlüsse anbieten, die bei einer entsprechenden Auslegung eine spielfreie Klemmung des Werbemittelträgers an den Gitterstäben des Einkaufwagens ermöglichen.

Die einzelnen Werbemittel könnten auf den Werbemittelträger aufgeklebt werden. Eine solche Klebung macht allerdings eine Reinigung des Werbemittelträgers in gewissen Zeitabständen notwendig. Einfachere Handhabungsverhältnisse ergeben sich in diesem Zusammenhang, wenn der Werbemittelträger eine Einschubführung für das als Schieber ausgeführte Werbemittel bildet, weil in diesem Fall zum Werbebmittelaustausch lediglich der Schieber ausgewechselt werden muß. Zusätzlich kann der Werbemittelträger selbst eine Werbefläche bilden, die im Falle eines Schiebereinsatzes abgedeckt wird.

In der Zeichnung wird die Erfindung in einem Ausführungsbeispiel dargestellt. Es zeigen

Fig. 1 eine Reihe von mehreren ineinandergeschobenen Einkaufwagen nach der Erfindung in einer schematischen Seitenansicht,

Fig. 2 einen erfindungsgemäßen Einkaufwagen ausschnittsweise im Bereich des heckseitigen Tragrahmens für den Warenkorb in einer teilweise aufgerissenen Seitenansicht in einem größeren Maßstab und

Fig. 3 einen Schnitt nach der Linie III-III der Fig. 2 in einem größeren Maßstab.

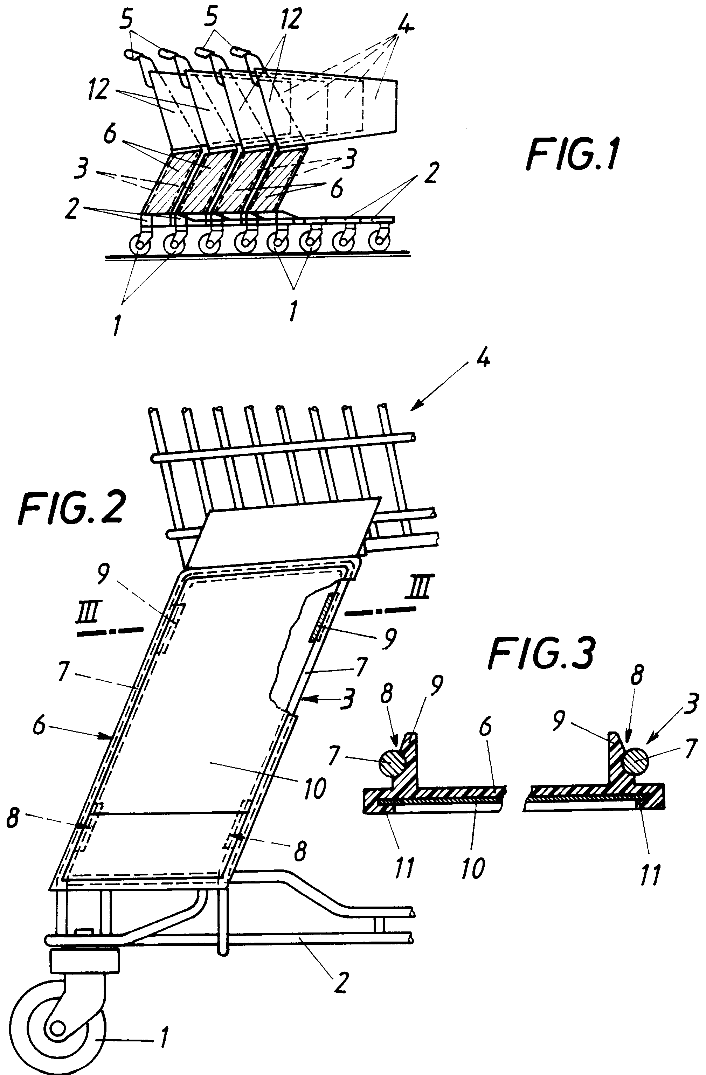

Die dargestellten Einkaufwagen bestehen jeweils aus einem mit Laufrädern 1 versehenen Fahrgestell 2, von dem heckseitig ein Tragrahmen 3 für einen frei vorkragenden Warenkorb 4 aufragt. Dieser als Gitterkorb ausgebildete Warenkorb 4 trägt einen Führungsbügel 5 zur Handhabung des Einkaufwagens und weist in bekannter Weise eine aus Übersichtlichkeitsgründen nicht dargestellte heckseitige Pendelwand auf, um den Wagenkorb des jeweils in der Wagenreihe nachfolgenden Wagens unter einem Einwärtsschwenken der Pendelwand in den Warenkorb 4 einschieben zu können, wie dies in der Fig. 1 angedeutet ist. Innerhalb der Wagenreihe 1 liegen die Tragrahmen 3 jeweils außerhalb des Wageneinschubbereiches, so daß diese Tragrahmen 3 der ineinandergeschobenen Einkaufwagen unmittelbar aneinanderschließen. Diese Tragrahmen 3 können daher vorteilhaft zur Anbringung von Werbemittelträgern 6 herangezogen werden, die aufgrund ihrer Anbringung an den Außenseiten der Tragrahmen unabhängig davon, ob der jeweilige Einkaufwagen benützt wird oder in einer Wagenreihe abgestellt ist, stets sichtbar bleiben. Innerhalb einer Wagenreihe wird sogar ein besonders auffälliges Erscheinungsbild durch die wiederholte Aneinanderreihung dieser Werbemittelträger 6 erreicht, wie dies durch die schraffierten Felder der Werbemittelträger 6 in Fig. 1 angedeutet ist.

Die Befestigung der Werbemittelträger 6 an den Trägerrahmen 3 kann in unterschiedlicher Weise erfolgen. Da der Trägerrahmen gemäß den Fig. 2 und 3 im allgemeinen aus Gitterstäben 7 gebildet wird, ergeben sich besonders einfache Befestigungsmöglichkeiten durch Schnappverschlüsse 8, die entsprechend der Fig. 3 aus an dem Werbemittelträger 6 vorgesehenen, federnden Ansätzen 9 bestehen, die Rastausnehmungen für die Gitterstäbe 7 aufweisen, so daß die Werbemittelträger 6 mit den Ansätzen 9 lediglich zwischen die Gitterstäbe 7 eingedrückt werden müssen, um eine schnappverschlußartige Klemmung sicherzustellen.

Damit die Werbemittel 10 einfach ausgewechselt werden können, bildet der Werbemittelträger 6 nach den Fig, 2 und 3 eine Einschubführung 11 für das als Schieber ausgebildete Werbemittel 10, das somit lediglich in die Einschubführung 11 eingeschoben werden muß. In der Fig. 2 ist dieser Schieber 10 zur besseren Veranschaulichung noch nicht vollständig in den Werbemittelträger 6 eingeschoben und ragt daher nach oben aus dem Werbemittelträger 6 heraus.

Was für die Sichtbarkeit der Seitenflächen des Tragrahmens 3 gilt, gilt naturgemäß auch für den Überstandsbereich 12 der Warenkörbe 4, wie sich dies unmittelbar aus der Fig. 1 ergibt. Aus diesem Grunde können auch diese Überstandsbereiche 12, die sich durch die außerhalb des Wageneinschubbereiches befindlichen Seitenwandbereiche der Warenkörbe ergeben, zum Anbringen von entsprechenden Werbemittelträgern ausnützen, ohne daß dadurch die Einsicht in die gitterartigen Warenkörbe entscheidend verschlechtert wird.

## Patentansprüche

1. Einkaufwagen, der zur Bildung einer Wagenreihe aus ineinandergeschobenen, gleichartigen Wagen ein Fahrgestell (2) mit einem außerhalb des Wageneinschubbereiches heckseitig aufragenden Tragrahmen (3) für einen oberhalb des Fahrgestelles (2) frei vorragenden Warenkorb (4) aufweist, der in einer Wagenreihe heckseitig den Warenkorb (4) des anschließenden, eingeschobenen Wagens aufnimmt, und der einen Werbeträger (6) bildet, dadurch gekennzeichnet, daß außen an den außerhalb des Wageneinschubbereiches befindlichen Seitenteilen des heckseitigen Tragrahmens (3) oder des Warenkorbes (4) wenigstens ein Werbemittelträger (6) vorgesehen ist.

2. Einkaufwagen nach Anspruch 1, dadurch gekennzeichnet, daß der Werbemittelträger (6) an den Seitenteilen des Tragrahmens (3) oder des Warenkorbes (4) anklemmbar ist.

3. Einkaufwagen nach Anspruch 2, dadurch gekennzeichnet, daß der Werbemittelträger (6) über Schnappverschlüsse anklemmbar ist.

4. Einkaufswagen nach einem der Ansprüche 1 bis 3, dadurch gekennzeichnet, daß der Werbemittelträger (6) eine Einschubführung (11) für das als Schieber ausgeführte Werbemittel (10) bildet.

FIG.1

FIG.2

FIG.3

Europäisches
Patentamt

# EUROPÄISCHER RECHERCHENBERICHT

Nummer der Anmeldung

EP    91 89 0134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X Y | EP-A-341 029 (H. REHRIG) * Zusammenfassung; Abbildungen * | 1,2,4 3 | B62B3/10 |
| Y,P | DE-A-4 011 099 (R. WANZL) * Zusammenfassung; Abbildungen * | 3 | |
| X | CA-A-1 191 879 (A. TRUBIANO) * Ansprüche; Abbildungen * | 1,2,4 | |

RECHERCHIERTE SACHGEBIETE (Int. Cl.5)

B62B

Der vorliegende Recherchenbericht wurde für alle Patentansprüche erstellt

| Recherchenort | Abschlußdatum der Recherche | Prüfer |
|---|---|---|
| DEN HAAG | 15 OCTOBER 1991 | FRANKS B.G. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................................
& : Mitglied der gleichen Patentfamilie, übereinstimmendes
    Dokument

EPO FORM 1503 03.82 (P0403)